# EUROPEAN PATENT APPLICATION

(11) **EP 1 321 332 A2**
(43) Date of publication of application: **25.06.2003**
(21) Application number: 02023715.2
(22) Date of filing: 23.10.2002
(51) Int. Cl.: B60Q 1/115

(54) **Optical axis adjusting device of vehicle headlamp**

(30) Priority: 30.10.2001 JP 2001331874
(71) Applicant: Mitsubishi Jidosha Kogyo Kabushiki Kaisha, Tokyo 108-8410 (JP)
(72) Inventor: Kayano, Masayuki, Mitsubishi Jidosha Kogyo K.K., Tokyo 108-8410 (JP); Takeda, Nobuaki, Mitsubishi Jidosha Kogyo K.K., Tokyo 108-8410 (JP); Matsuura, Shinya, Mitsubishi Jidosha Kogyo K.K., Tokyo 108-8410 (JP)
(74) Representative: Kern, Ralf M., Dipl.-Ing.

(57) **Abstract**

In an optical axis adjusting device of a vehicle headlamp, which judges an inclined state on the basis of detection of an ultrasonic sensor of a vehicle, and performs an optical axis adjustment of a head lamp, in order to accurately judge the inclined state and to suitably adjust the optical axis of the head lamp, with respect to the detection by the ultrasonic sensor, a factor hindering its accurate detection is detected, and when it is judged that the ultrasonic sensor can not perform accurate detection, the optical axis adjustment of the head lamp is suspended.

## Description

### BACKGROUND OF THE INVENTION

### Field of the Invention

The present invention relates to an optical axis adjusting device for adjusting an optical axis of a head lamp in accordance with an inclined state of a vehicle.

### Description of the Related Art

In a case where an optical axis adjustment of a head lamp is insufficient, there occurs a case where a dazzling feeling is given to another vehicle.

Then, conventionally, various techniques for preventing the dazzling feeling from being given to a driver of an oncoming vehicle by adjusting the optical axis of the head lamp in accordance with the inclined state of the vehicle with respect to the ground have been studied, and Japanese Patent Application No. 130143/1999 (Japanese Patent Laid-Open No. 2000-318514) has been filed by the present assignee.

In this application, a signal outputted from an ultrasonic sensor and reflected by the ground is received, so that a distance between the ultrasonic sensor and the ground is measured. The measurement of the distance by this ultrasonic sensor is performed at the front and the rear of the vehicle, and the inclined state of the vehicle with respect to the ground is judged on the basis of a difference between the distances. When a road surface is an unpaved road surface, the inclined state of the vehicle with respect to the ground is regarded as being unable to be accurately judged, and the optical axis adjustment is prohibited.

However, in the surrounding environment of the vehicle, there are various disturbances by which the detection itself by the ultrasonic sensor cannot be accurately performed. For example, sound and rain are conceivable. In the case of the sound, the sound and a signal wave outputted from the ultrasonic sensor interfere with each other, its waveform is distorted, and the signal wave received by the ultrasonic sensor becomes inaccurate.

In the case of rain, the reflectivity of the road surface to the signal wave outputted from the ultrasonic sensor is low, and the received signal wave can be inaccurate.

Accordingly, also in the foregoing related art, in the case where the signal wave detected by the ultrasonic sensor is inaccurate, the judgment itself as to whether or not the road surface is the unpaved road surface is inaccurate, and therefore, the advisability judgment of the optical axis adjustment of the head lamp also becomes inaccurate.

### SUMMARY OF THE INVENTION

The present invention has been made in view of the above circumstances, and has an object to provide an optical axis adjusting system of a head lamp, which uses an ultrasonic sensor to judge an inclined state and performs an optical axis adjustment of a vehicle head lamp, and in which the inclined state of the vehicle is accurately judged and the optical axis of the head lamp can be suitably adjusted.

In the invention, the inclined state of the vehicle with respect to the road surface is judged on the basis of the detection of the ultrasonic sensor, and the optical axis adjustment of the head lamp is performed from the inclined state. When a hindrance factor detection device for detecting the existence of a factor hindering the detection by the ultrasonic sensor detects the hindrance factor, a control device suspends the optical axis adjustment of the head lamp.

By this, only when the ultrasonic sensor detects high accuracy data without the hindrance factor, the optical axis of the head lamp is adjusted on the basis of the inclined state of the vehicle, and the control of the optical axis adjusting device with high accuracy is enabled.

### BRIEF DESCRIPTION OF DRAWINGS

Fig. 1 is a schematic structural view of a truck on which an optical axis adjusting device of a vehicle headlamp according to an embodiment of the invention is mounted.

Fig. 2 is a schematic view of a frame front part of the truck expressing an attachment state of an ultrasonic sensor.

Fig. 3 is a schematic view expressing the attachment state of the ultrasonic sensor.

Figs. 4A and 4B are explanatory views of a judgment method of an inclined state.

Fig. 5 is a horizontal sectional view of a head lamp part in which an optical axis adjusting device is installed.

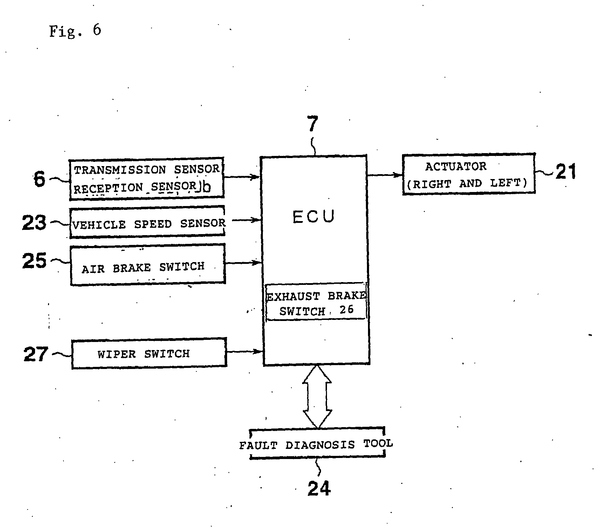

Fig. 6 is a control block diagram of the optical axis adjusting device of the embodiment.

Fig. 7 is a flowchart of adjustment control by the optical axis adjusting device of the embodiment.

### DETAILED DESCRIPTION OF PREFERRED EMBODIMENTS

Hereinafter, embodiments of the invention will be described in detail with reference to the drawings.

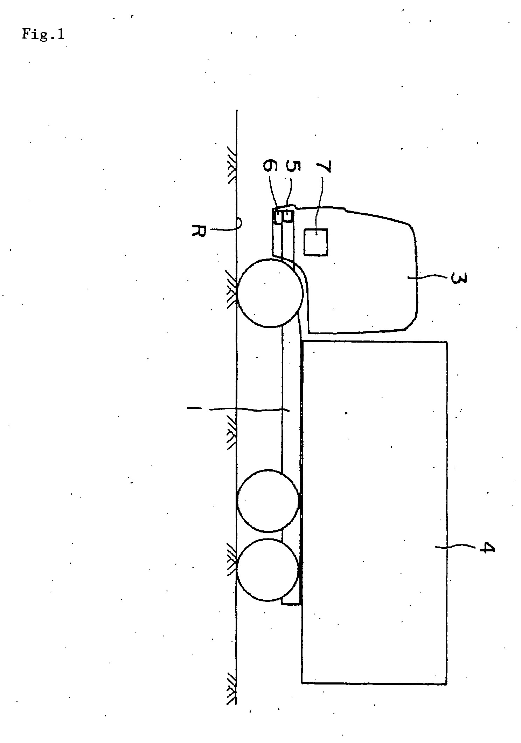

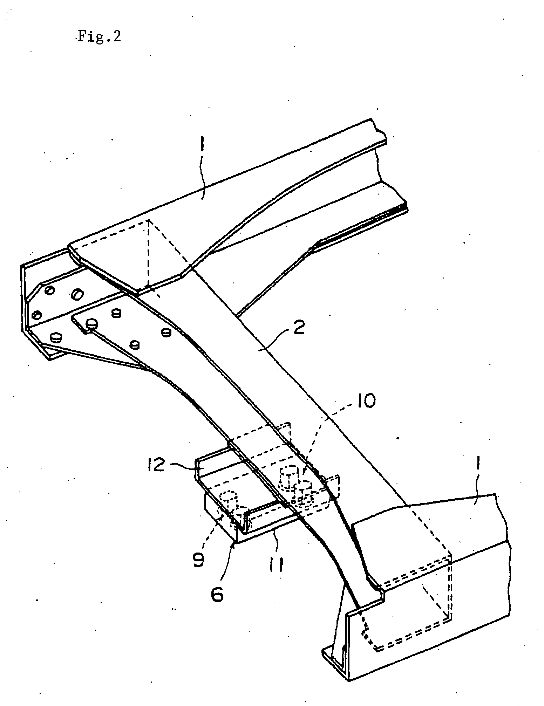

In an optical axis adjusting device of a vehicle headlamp of this embodiment, as shown in Figs. 1 and 2, plural cross members 2 orthogonal to a pair of right and left side frames 1 are fitted to the flames, and a cab 3 and a bed 4 are mounted on the frames such as the side frames 1 and the cross members 2. Right and left head lamps 5 are installed at the front end part of a vehicle, and an inclination sensor 6 as an inclination judgment device is disposed substantially at the center part of the cross member 2. A detection signal of the inclination sensor 6 is inputted to an ECU 7 as a control device, and in the ECU 7, an inclined state of a vehicle front part with respect to a road surface is judged on the basis of the detection information from the inclination sensor 6.

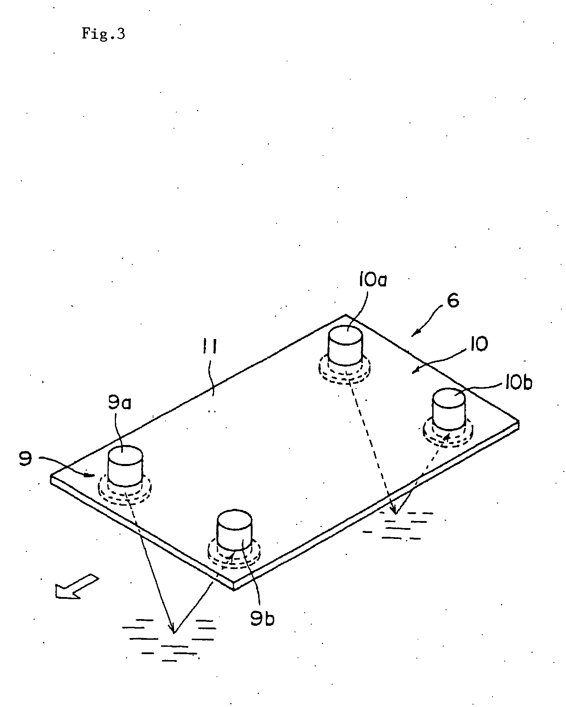

Here, the inclination sensor 6 will be described in detail. As shown in Figs. 2 and 3, the inclination sensor 6 is two pairs of ultrasonic sensors 9 and 10 for performing transmission and reception in a vehicle width direction, and includes two transmission sensors 9a and 10a as signal transmission parts and reception sensors 9b and 10b as signal reception parts.

Ultrasonic waves from the transmission sensors 9a and 10a are reflected by the road surface R and are received by the respective reception sensors 9b and 10b, and the inclined state of the vehicle with respect to the road surface R is judged by the ECU 7 on the basis of a reception time difference between the reception sensors 9b and 10b.

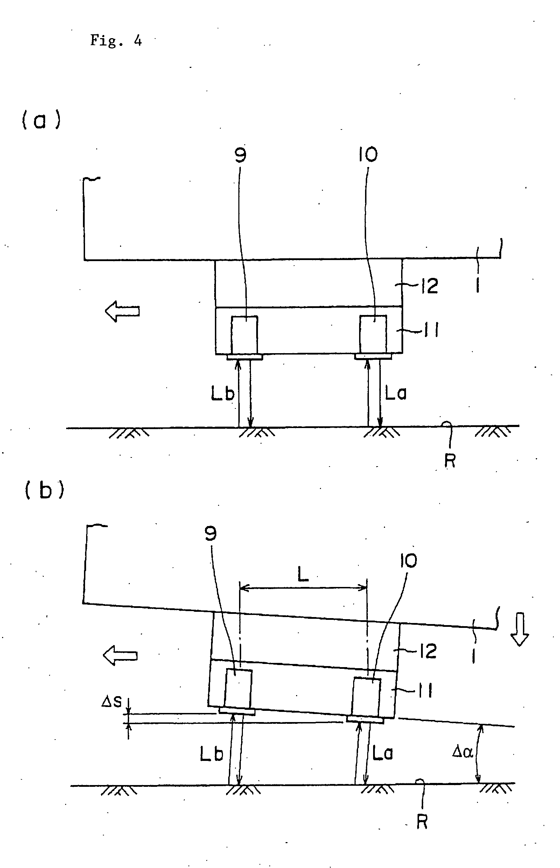

A judgment method of the inclined state of the vehicle by the inclination sensor 6 will be described in detail with reference to Figs. 4A and 4B.

As shown in Fig. 4A, in the case where the vehicle front part is not inclined with respect to the road surface R, a passage La of the ultrasonic wave transmitted from the front transmission sensor 9a to the reception sensor 9b becomes equal to a passage Lb of the ultrasonic wave transmitted from the rear transmission sensor 10a to the reception sensor 10b, and a reception time difference ΔT between the reception sensors 9b and 10b becomes zero. On the other hand, as shown in Fig. 4B, in the case where goods are loaded onto the bed 4 so that the rear part of the vehicle sinks and the vehicle front part is inclined rearward (upward) with respect to the road surface R, the passage La of the ultrasonic wave transmitted from the front transmission sensor 9a to the reception sensor 9a becomes longer than the passage Lb of the ultrasonic wave transmitted from the rear transmission sensor 10a to the reception sensor 10b, and the reception time difference ΔT is produced between the reception sensors 9b and 10b.

In the case where the vehicle front part is inclined rearward as stated above, a distance difference ΔS is produced in a height direction between the transmission sensors 9a and 10a spaced apart from each other by a distance L. An inclination angle Δα can be obtained from the distance difference ΔS.

Accordingly, the ECU 7 can judge the inclined state of the vehicle by deriving the distance difference ΔS on the basis of the reception times difference ΔT between the reception sensors 9b and 10b and calculating the inclination angle Δα.

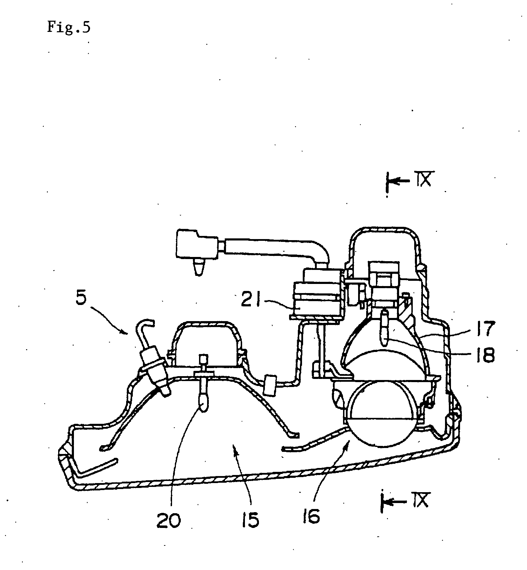

Besides, the head lamp 5 and the optical axis adjusting device thereof will be described with reference to Fig. 5.

The head lamp 5 is constituted by a Hi side lamp 15 and a Low side lamp 16, and the Low side lamp 16 is, for example, a high intensity lamp (for example, a discharge head lamp). In the Low side lamp 16, a high intensity bulb 18 is attached to a reflector holder 17. The Hi side lamp 15 is provided with, for example, a halogen bulb 20. Then, the high intensity bulb 18, together with the reflector holder 17, is tilted and driven by an actuator 21 as an optical axis adjusting device, and the optical axis is adjusted in the up-and-down direction. The actuator 21 is driven by instructions corresponding to the inclined state judged by the ECU 7, and the optical axis of the high intensity bulb 18 is adjusted.

There is a case where the ultrasonic sensor can not accurately receive a signal reflected from the road surface because of the surrounding environment of the vehicle, and a hindrance factor detection device is provided as a device for detecting the existence of a factor hindering the detection by the ultrasonic sensor as stated above. As the hindrance factor detection device, there are an abnormal sound detection device and a rain detection device.

Specifically, the inclination sensor 6 judges the inclined state of the vehicle with respect to the road surface R on the basis of the reception time difference between both when the ultrasonic waves from the transmission sensors 9a and 10a are reflected by the road surface R and are received by the reception sensors 9b and 10b.

Information from an air brake switch 25, which is installed in an air pressure line of an air brake and is an abnormal sound detection device to be turned ON during the operation of the air brake, is inputted to the ECU 7. Alternatively, information from an exhaust brake switch 26, which is electrically turned ON when an operation condition of an exhaust brake is established, is inputted. This exhaust brake switch 26 is a switch electrically turned ON when a state is detected in which a main switch operated by a driver is in an ON state, an accelerator pedal disposed in a vehicle compartment is OFF, a clutch for connecting/disconnecting a gearbox and an engine is OFF, and the gearbox is in gear. Although the exhaust brake switch 26 is disposed in the inside of the ECU 7 in this embodiment, it may be disposed outside.

Here, the air brake controls an air pressure by a brake valve and presses a brake shoe to a drum to effect braking. On the other hand, the exhaust brake is an auxiliary brake of the engine brake, and is operated by sending an air pressure of an air tank to a unit and closing a butterfly valve.

In this ECU 7, when the air brake switch 25 is on, or the exhaust brake switch 26 is on, irrespective of the inclined state of the vehicle from the inclination sensor 6, the control of the optical axis adjusting device is suspended.

When the road surface is wet by a rain, since the ultrasonic wave of the inclination sensor 6 is diffused by the road surface and the reception accuracy at the reception sensors 9b and 10b is lowered, the correction of the inclination angle of the head lamp 5 is not carried out at the time of the rain. Information from a wiper switch 27 as a rain detection device, for causing the operation of a wiper device for wiping the rain on the window glass of the vehicle is inputted to the ECU 7, and at the time of the on operation of the wiper switch 27, the control of the optical axis adjusting device is suspended irrespective of the inclined state of the vehicle from the inclination sensor 6.

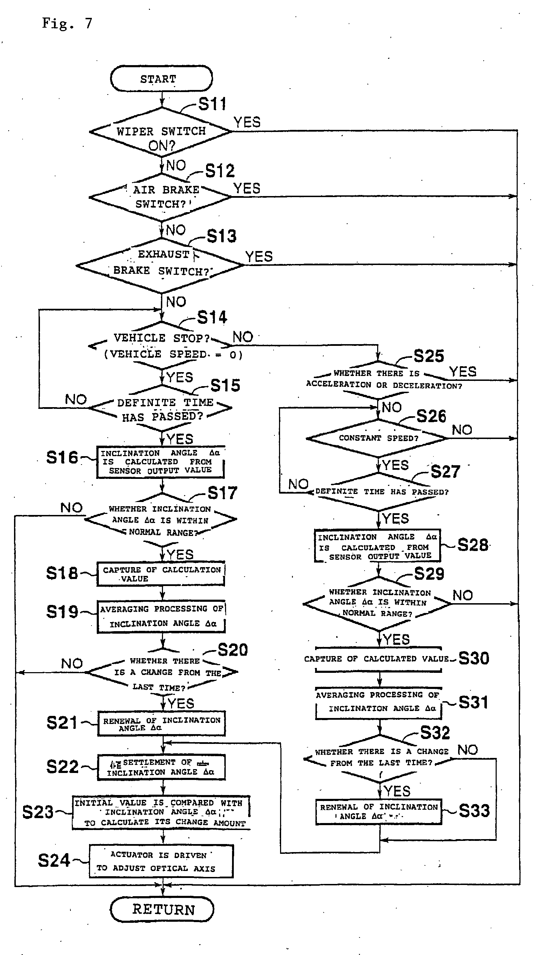

Hereinafter, the control of the optical axis adjusting device of the head lamp will be described with reference to Fig. 7.

At step S11, it is judged whether or not the wiper switch 27 is subjected to an on operation, and if the wiper switch 27 is subjected to the on operation, it is judged that the road surface R is wet by a rain, and a high accuracy inclination judgment by the inclination sensor 6 can not be performed, the procedure is directly returned, and if the wiper switch 27 is subjected to an off operation, the procedure proceeds to step S12. At the step S12, it is judged whether or not the air brake switch 25 is ON, and at step S13, it is judged whether or not the exhaust brake switch 26 is turned ON. If the air brake switch 25 or the exhaust brake switch 26 is ON, it is judged that a high accuracy inclination judgment by the inclination sensor 6 can not be performed because of the air discharge sound of the air brake or the exhaust sound by the exhaust brake, and the procedure is directly returned. If both the switches 25 and 26 are subjected to the off operation, the procedure proceeds to step S14.

At the step S14, on the basis of the detection result of a vehicle speed sensor 23, a stop state of the vehicle is judged, and if the vehicle is at a stop, it is judged at step S15 whether or not a definite time has passed in the stop state of the vehicle. In the case where the definite time has passed, the inclined state of the vehicle is detected at step S16 and the following, while in the case where the definite time has not passed in the stop state of the vehicle, the inclined state of the vehicle is not detected.

At this step S16, by the foregoing calculation method, the inclination angle Δα is calculated on the basis of the output value of the inclination sensor 6, and in the case where it is judged at step S17 that this calculated inclination angle Δα is within a normal range, this calculated value is captured at step S18, and plural inclination angles Δα calculated every predetermined time are averaged at step S19. At the step S17, it is judged whether or not the calculated inclination angle Δα is within this normal range, and in the case where the calculated inclination angle is not within this normal range, it is judged that the output is abnormal because of the influence of roughness of the road surface or rain, and the procedure is directly returned without capturing the calculated value.

At step S20, it is judged whether or not the inclination angle Δα averaged at the step S19 is changed from the previous inclination angle Δα obtained in the stop state of the vehicle, and if changed, the inclination angle Δα obtained this time at the step S21 is renewed, and if not changed, the procedure is directly returned. Then, at step S22, the renewed inclination angle Δα of the vehicle in the stop state is settled, at step S23, the inclination angle Δα of the foregoing initial value is compared with the settled inclination angle Δα to calculate a change amount of both, and at step S24, the actuator 21 is driven on the basis of the change amount, and the optical axis of the high intensity bulb 18 is adjusted so that the inclination angle of the head lamp 5 is corrected.

When the vehicle starts to travel, and the traveling state of the vehicle is judged at the step S14 on the basis of the detection result of the vehicle speed sensor 23, and if it is judged at step S25 that there is no acceleration or deceleration of the vehicle, the procedure proceeds to step S26. At the step S26, a constant speed state of the vehicle is judged, and if the vehicle travels at a constant speed, it is judged at step S27 whether or not a definite time has passed. That is, in the acceleration or deceleration state of the vehicle, since the vehicle is tiled forward or backward by the forward or backward acceleration applied to the vehicle, there is a possibility that a measurement error occurs in the detection result of the inclination sensor 6. At the step S27, if the vehicle is in the constant speed state and the definite time has passed, the inclined state of the vehicle is detected at step S28 and the following. On the other hand, in the case where the definite time has not passed in the constant speed state of the vehicle, the inclined state of the vehicle is not detected.

At this step S28, the inclination angle Δα is calculated on the basis of the output value of the inclination sensor 6, and in the case where it is judged at step S29 that the calculated inclination angle Δα is within the normal range, this calculated value is captured at step S30, and plural inclination angles Δα calculated every predetermined time are averaged at step S31. At step S32, it is judged whether or not the inclination angle Δα averaged at the step S31 is changed from the previous inclination angle Δα obtained in the constant speed state of the vehicle, and if changed, the inclination angle Δα obtained this time is renewed at step S33, and if not changed, the procedure proceeds to the step S22.

At the step S22, similarly to the foregoing, the renewed or previous inclination angle Δα in the constant speed state of the vehicle is settled, at the step S23, the foregoing inclination angle Δα of the initial value and the settled inclination angle Δα are compared with each other to calculate the change amount of both, and at the step S24, the actuator 21 is driven on the basis of the change amount, and the optical axis of the high intensity bulb 18 is adjusted so that the inclination angle of the head lamp 5 is corrected.

Besides, an oncoming vehicle feels the dazzling feeling of the head lamp 5, and it is more effective if the inclination angle Δα of the vehicle during traveling is detected to correct the inclination angle of the head lamp 5. Incidentally, it is desired that the foregoing averaging processing at the steps S19. and S31 uses weighted mean, and a statistical processing using a standard deviation may be adopted. In the traveling state of the vehicle, goods are not loaded onto or not unloaded from the bed 4, and in this way, the high accuracy inclination angle Δα can be detected by averaging the detection values (inclination angle Δα) of the inclination sensor 6, and the inclination angle of the head lamp 5 can be suitably corrected on the basis of this inclination angle Δα.

As stated above, in the optical axis adjusting device of the vehicle headlamp according to this embodiment, since an abnormal sound, such as a brake operation sound or an engine sound, generated from the vehicle has a great influence on an ultrasonic wave and there is a fear that its waveform is distorted and accurate detection can not be performed, when the air brake switch 25 or the exhaust brake switch 26 is turned ON and the exhaust sound is produced, the ECU 7 suspends the correction of the inclination angle of the head lamp 5.

Accordingly, in the case where the abnormal sound, such as the air discharge sound of the air brake or the exhaust sound of the exhaust brake, is produced and there is a fear that the detection accuracy of the inclination sensor 6 is lowered, the inclination angle of the head lamp 5 is not corrected, and accordingly, only when the inclination sensor 6 detects high accuracy data, the inclination angle of the head lamp 5 is corrected on the basis of the inclined state of the vehicle, and the high accuracy optical axis adjusting control is enabled.

As described above, according to the invention, generation of the abnormal sound can be detected from the existing switch etc. without using a specific device such as a mike, and the optical axis of the head lamp can be suitably adjusted by only adding the control.

Incidentally, in the above embodiment, although the abnormal sound detection device is made the air brake switch 25 and the exhaust brake switch 26, it is not limited to this, and irrespective of the exhaust sound of the brake, an operation sound of a gearbox or an engine is directly detected, and the optical axis adjusting control may be suspended on the basis of its volume or frequency.

Besides, in the foregoing embodiment, although the rain detection device is made the wiper switch 27 as the operation switch for operating the wiper device, it is not limited to this, and it may be a rain sensor made of a raindrop sensor for directly detecting a rainfall in the surrounding area of the vehicle, and further, a receiver mounted on the vehicle receives information of the road environment in which the vehicle travels, from, for example, a beacon disposed at the side part of the road, and may detect whether or not the road on which the vehicle is traveling is in a state in which a rain is falling.

## Claims

1. An optical axis adjusting device of a vehicle headlamp, which judges an inclined state of a vehicle with respect to a road surface on the basis of detection of an ultrasonic sensor and performs an optical axis adjustment of a head lamp from the inclined state, comprising:
a hindrance factor detection device for detecting a factor hindering the detection by the ultrasonic sensor; and
a control device for suspending the optical axis adjustment of the head lamp when the hindrance factor is detected by the hindrance factor detection device.

2. An optical axis adjusting device of a vehicle headlamp according to claim 1, wherein the hindrance factor detection device is an abnormal sound detection device for detecting an abnormal sound state generated from the vehicle.

3. An optical axis adjusting device of a vehicle headlamp according to claim 2, wherein the abnormal sound detection device is an air brake switch for detecting operation of an air brake.

4. An optical axis adjusting device of a vehicle headlamp according to claim 2, wherein the abnormal sound detection device is an exhaust brake switch for detecting operation of an exhaust brake.

5. An optical axis adjusting device of a vehicle headlamp according to claim 1, wherein the hindrance factor detection device is a rain detection device for detecting a rain state.

6. An optical axis adjusting device of a vehicle headlamp according to claim 5, wherein the rain detection device is an operation switch for operating a wiper device for wiping a rain on a window glass of the vehicle.

7. An optical axis adjusting device of a vehicle headlamp according to claim 5, wherein the rain detection device is a rain sensor for detecting a rain state in a surrounding area of the vehicle.

8. An optical axis adjusting device of a vehicle headlamp according to claim 5, wherein
the rain detection device is a reception device for receiving road surrounding information, and
the reception device detects from the received road surrounding information that a road on which the vehicle is traveling is in a rain state.

9. An optical axis adjusting device of a vehicle headlamp according to claim 1, wherein
the ultrasonic sensor includes at least one signal transmission part and two signal reception parts for receiving signals transmitted from the signal transmission part via a road surface, and
the control device judges the inclined state of the vehicle on the basis of a reception time difference of the ultrasonic sensor.

10. An optical axis adjusting device of a vehicle headlamp according to claim 1, wherein the control device averages inclination angles indicating judged inclined states, and performs the optical axis adjustment of the head lamp in accordance with a difference between a judged inclination angle and an average value of the inclination angles.
